(19) Europäisches Patentamt
European Patent Office
Office européen des brevets

(11) Veröffentlichungsnummer: **0 017 841**
**B1**

(12) # EUROPÄISCHE PATENTSCHRIFT

(45) Veröffentlichungstag der Patentschrift: **12.01.83**

(51) Int. Cl.³: **C 09 B 31/16,** C 09 B 31/30, D 06 P 1/39, D 06 P 3/06

(21) Anmeldenummer: **80101728.6**

(22) Anmeldetag: **01.04.80**

(54) **Polyazofarbstoffe sowie ihre Verwendung zum Färben stickstoffhaltiger Fasermaterialien.**

(30) Priorität: **14.04.79 DE 2915214**

(43) Veröffentlichungstag der Anmeldung: **29.10.80 Patentblatt 80/22**

(45) Bekanntmachung des Hinweises auf die Patenterteilung: **12.01.83 Patentblatt 83/2**

(84) Benannte Vertragsstaaten: **BE CH DE FR GB IT LI**

(56) Entgegenhaltungen:
**CH-A-202 734**
**CH-A-202 735**
**FR-A-395 960**
**FR-A-793 459**

(73) Patentinhaber: **BAYER AG, Zentralbereich Patente, Marken und Lizenzen, D-5090 Leverkusen 1, Bayerwerk (DE)**

(72) Erfinder: **Westphal, Jochen, Dr., Naegelestrasse 10A, *D-4000 Düsseldorf (DE)***
Erfinder: **Henk, Hermann, Dr., Roggendorfstrasse 55, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Polyazofarbstoffe sowie ihre Verwendung zum Färben stickstoffhaltiger Fasermaterialien

Die vorliegende Erfindung betrifft Polyazofarbstoffe der Formel

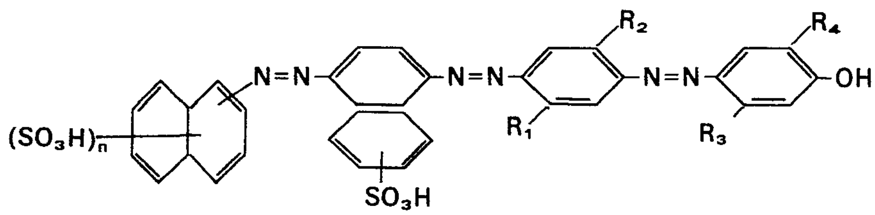
(I)

worin
n = 1,2 oder 3,
$R_1$ = H, $C_1$ bis $C_4$-Alkyl, $C_1$ bis $C_4$-Alkoxy, Acylamino,
$R_2$ = H, $C_1$ bis $C_4$-Alkyl, $C_1$ bis $C_4$-Alkoxy,
$R_3$ = H, $C_1$ bis $C_4$-Alkyl, Hydroxy, Acylamino,
$R_4$ = H, $C_1$ bis $C_4$-Alkyl, $C_1$ bis $C_4$-Alkoxy, Carboxy,

wobei Alkyl und Alkoxy auch übliche Substituenten aufweisen, bevorzugt aber unsubstituiert sind, und Acylamino vorzugsweise für $C_1$ bis $C_4$-Alkylcarbonylamino, $C_{11}$ bis $C_{44}$-Alkylsulfonylamino oder für gegebenenfalls substituiertes Phenylcarbonylamino oder Phenylsulfonylamino stehen.

Besonders bevorzugte Farbstoffe sind solche der Formeln

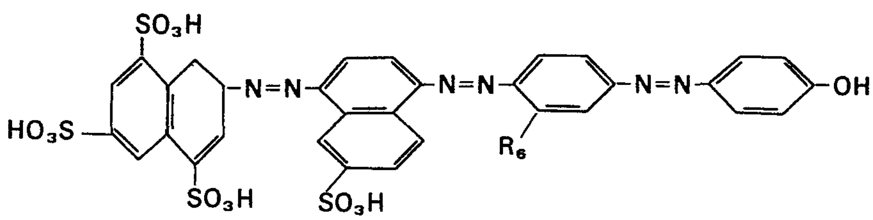
(II)

und

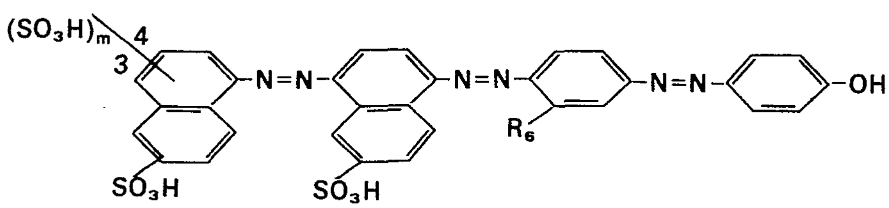
(III)

worin

m = 0 oder 1
$R_6$ = H, $CH_3$, $NHCOCH_3$.

Farbstoffe der Formel I erhält man bevorzugt durch Diazotierungs- und Kupplungsreaktion, wobei die Reihenfolge der Verknüpfung wie in der Azochemie bekannt häufig variierbar ist. Einer der Wege, Farbstoffe der Formel I herzustellen, geht vom Diazoniumsalz des Amins

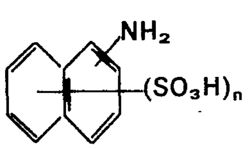
(IV)

das auf ein Naphthylamin

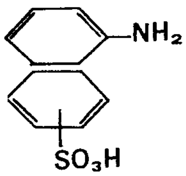
(V)

gekuppelt wird.

Der so erhaltene Monoazofarbstoff wird weiterdiazotiert und mit einem Amin

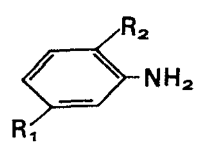
(VI)

zur Reaktion gebracht.

Nach erfolgter Diazotierung erfolgt die Schlusskupplung auf

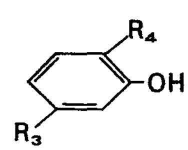
(VII)

Beispiel 1

1 mol 2-Aminonaphthalin-4,6,8-trisulfosäure wird in 1600 ml Eis/Wasser suspendiert mit 230 ml 4,35 normaler Nanitritlösung diazotiert. Man rührt 0,5 h nach und zerstört dann den Nitritüberschuss mit wenig Amidosulfonsäurelösung.

In die Suspension des Diazoniumsalzes gibt man 750 g Eis und 1 mol 1-Aminonaphthalin-6-sulfonsäure. Mit 630 ml 20%iger Natronlauge wird in etwa 40 min auf pH 2 gestellt und 30 min nachgerührt.

Der Monoazofarbstoff wird mit 500 g Eis und 140 ml 28%iger Salzäure versetzt. In 10-15 min diazotiert man mit 230 ml 4,35 normaler Nanitritlösung. Nach etwa 0,5 h wird der Nitritüberschuss mit Amidosulfonsäure zerstört.

Das Diazoniumsalz wird mit 500 g Eis und in 15 min mit 1 mol m-Toluidin versetzt. Mit 80 ml 20%iger Natronlauge wird in ca. 2 h ein pH-Wert von 3 eingestellt.

Man gibt 1,5 kg Eis und 210 ml 28%ige Salzäure zu und diazotiert mit 230 ml 4,35 normaler Nanitritlösung. Nach 0,5 h nimmt man mit wenig Amidosulfonsäure den Nitritüberschuss weg.

Nach Zugabe von 1 mol Phenol wird in 0,5 h mit (ca. 400 ml) 20%iger Natronlauge pH 8 eingestellt und 3 h gehalten. Nach Aussalzen und Filtrieren wird u.V. getrocknet.

Der Farbstoff, der in Form der freien Säure der Formel

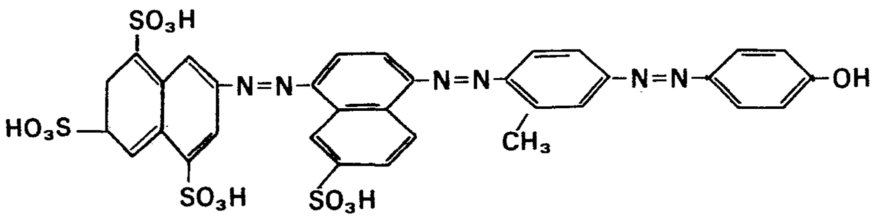

entspricht, färbt Wolle, Polyamid und Leder in brillanten rotstichigen Braunnuancen.

Weitere wertvolle Braunfarbstoffe für Wolle, Polyamid und Leder der Formel I erhält man, wenn in Beispiel 1 2-Aminonaphthalin-4, 6,8-sulfonsäure durch A, 1-Aminonaphthalin-6-sulfonsäure durch B, m-Toluidin durch C und Phenol durch K der folgenden Tabelle ersetzt.

Tabelle 1

| Beispiel | A | B | C | K |
|---|---|---|---|---|
| 2 | 2-Aminonaphthalin-4,8-disulfonsäure | 1-Aminonaphthalin-6-sulfonsäure | m-Toluidin | Phenol |
| 3 | 2-Aminonaphthalin-4,8-disulfonsäure | 1-Aminonaphthalin-6-sulfonsäure | 3-Acetaminoanilin | Phenol |
| 4 | 2-Aminonaphthalin-4,8-disulfonsäure | 1-Aminonaphthalin-6-sulfonsäure | Anilin | Phenol |
| 5 | 2-Aminonaphthalin-4,8-disulfonsäure | 1-Aminonaphthalin, 7-sulfonsäure | m-Toluidin | Phenol |
| 6 | 2-Aminonaphthalin-4,8-disulfonsäure | 1-Aminonaphthalin-6/7-sulfonsäure | m-Toluidin | Phenol |
| 7 | 2-Aminonaphthalin-4,8-disulfonsäure | 1-Aminonaphthalin-6/7-sulfonsäure | Anilin | Salicylsäure |
| 8 | 2-Aminonaphthalin-4,8-disulfonsäure | 1-Aminonaphthalin-6/7-sulfonsäure | 3-Acetaminoanilin | Salicylsäure |
| 9 | 2-Aminonaphthalin-4,6,8-trisulfonsäure | 1-Aminonaphthalin-6-sulfonsäure | 3-Acetaminoanilin | Salicylsäure |
| 10 | 2-Aminonaphthalin-4,6,8-trisulfonsäure | 1-Aminonaphthalin-6/7-sulfonsäure | m-Toluidin | Phenol |
| 11 | 2-Aminonaphthalin-4,6,8-trisulfonsäure | 1-Aminonaphthalin-6/7-sulfonsäure | Anilin | Phenol |

Tabelle 1

| Beispiel | A | B | C | K |
|---|---|---|---|---|
| 12 | 1-Aminonaphthalin-6-sulfonsäure | 1-Aminonaphthalin-6-sulfonsäure | m-Toluidin | Phenol |
| 13 | 1-Aminonaphthalin-6/7-sulfonsäure | 1-Aminonaphthalin-6/7-sulfonsäure | Anilin | Phenol |
| 14 | 1-Aminonaphthalin-6/7-sulfonsäure | 1-Aminonaphthalin-6/7-sulfonsäure | m-Toluidin | Salicylsäure |

## Patentansprüche

1. Polyazofarbstoffe der Formel

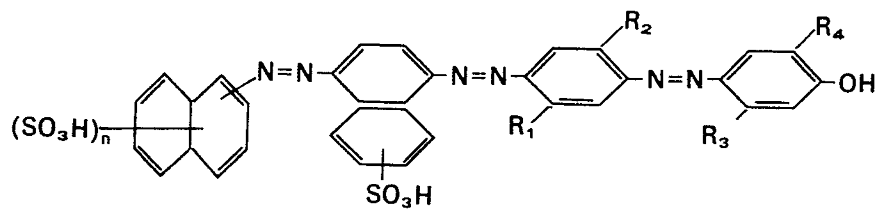

worin
n = 1,2 oder 3,
$R_1$ = H, $C_1$ bis $C_4$-Alkyl, $C_1$ bis $C_4$-Alkoxy, Acylamino,
$R_2$ = H, $C_1$ bis $C_4$-Alkyl, $C_1$ bis $C_4$-Alkoxy,
$R_3$ = H, $C_1$ bis $C_4$-Alkyl, Hydroxy, Acylamino,
$R_4$ = H, $C_1$ bis $C_4$-Alkyl, $C_1$ bis $C_4$-Alkoxy, Carboxy,

2. Polyazofarbstoffe der Formel

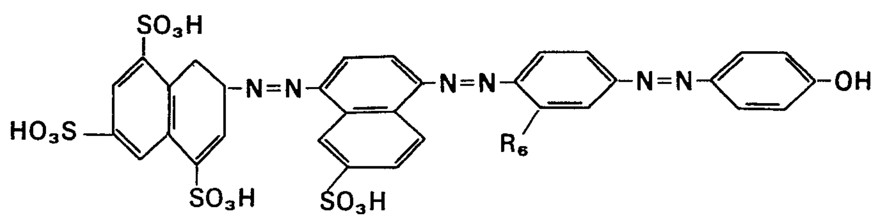

und

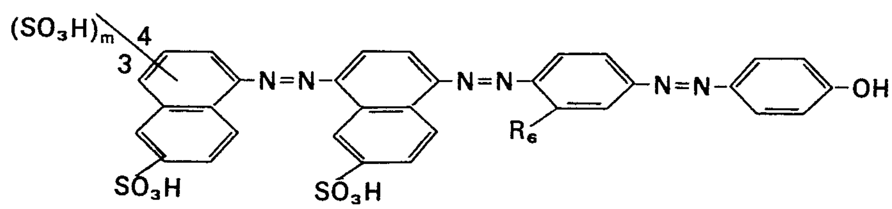

worin

m = 0 oder 1
$R_6$ = H, $CH_3$, $NHCOCH_3$.

3. Verwendung der Farbstoffe der Ansprüche 1 und 2 zum Färben stickstoffhaltiger Fasermaterialien, insbesondere Wolle und Polyamid, sowie zum Färben von Leder.

## Claims

1. Polyazo dye-stuff of the formula

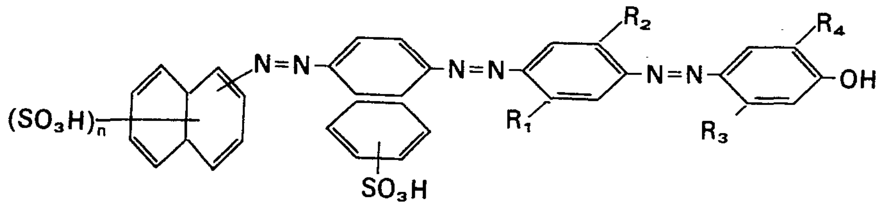

wherein
n = 1, 2 or 3,
$R_1$ = H, $C_1$-$C_4$ alkyl, $C_1$-$C_4$ alkoxy or acylamino,
$R_2$ = H, $C_1$-$C_4$ alkyl or $C_1$-$C_4$ alkoxy,
$R_3$ = H, $C_1$-$C_4$ alkyl, hydroxyl or acylamino, and
$R_4$ = H, $C_1$-$C_4$ alkyl, $C_1$-$C_4$ alkoxy or carboxyl.

2. Polyazo dye-stuffs of the formula

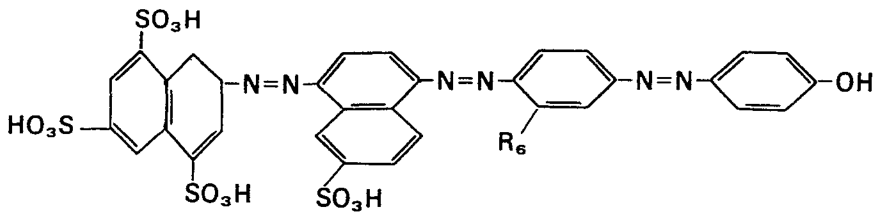

and

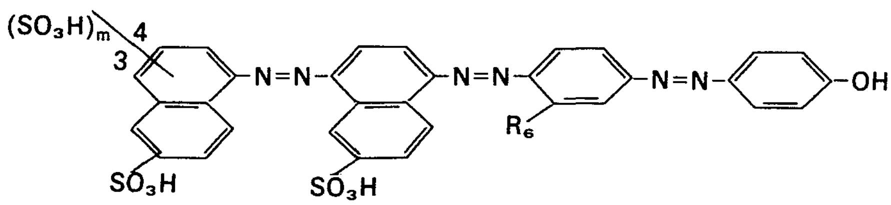

wherein
m = 0 or 1, and
$R_6$ = H, $CH_3$ or $NHCOCH_3$.

3. Use of the dye-stuffs of claims 1 and 2 for dyeing nitrogen-containing fibre materials, in particular wool and polyamide, and for dyeing leather.

## Revendications

1. Colorants polyazoïques de formule:

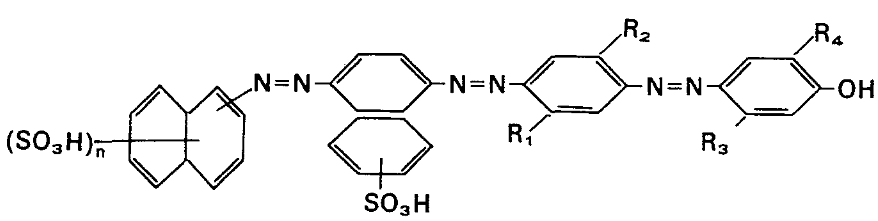

dans laquelle
n = 1, 2 ou 3,
$R_1$ = H, alcoyle en $C_1$-$C_4$, alcoxy en $C_1$-$C_4$, acylamino,
$R_2$ = H, alcoyle en $C_1$-$C_4$, alcoxy en $C_1$-$C_4$,
$R_3$ = H, alcoyle en $C_1$-$C_4$, hydroxy, acylamino,
$R_4$ = H, alcoyle en $C_1$-$C_4$, alcoxy en $C_1$-$C_4$, carboxy.

2. Colorants polyazoïques de formule:

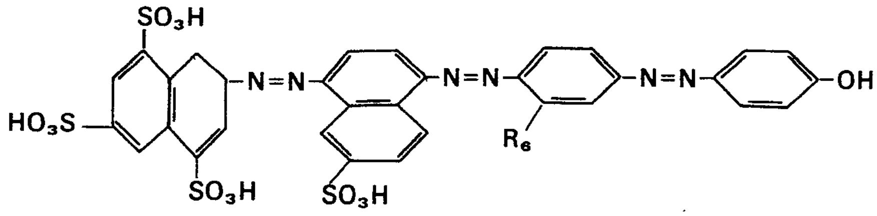

et

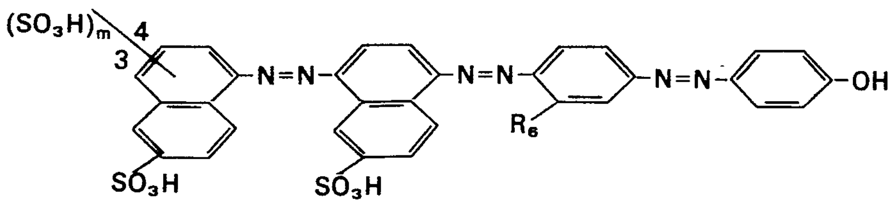

où
m = 0 ou 1, et
$R_6$ = $H_3$, CH, $NHCOCH_3$.

3. Utilisation des colorants selon les revendications 1 et 2 pour la teinture de matières fibreuses contenant de l'azote, en particulier de la laine et du polyamide, de même que pour la teinture du cuir.